# EUROPÄISCHE PATENTSCHRIFT

(11) **EP 2 688 779 B1**
(45) Veröffentlichungstag und Bekanntmachung des Hinweises auf die Patenterteilung: **29.04.2015**
(21) Anmeldenummer: 12713638.0
(22) Anmeldetag: 21.03.2012
(51) Int. Cl.: B60T 8/17, B60T 17/22, B60T 7/04, B60T 7/08

(54) **AKTUATOR FÜR EIN BREMSSYSTEM EINES SCHIENENFAHRZEUGS**
ACTUATOR FOR A BRAKE SYSTEM OF A RAIL VEHICLE
ACTIONNEUR POUR UN SYSTÈME DE FREINAGE D'UN VÉHICULE FERROVIAIRE

(30) Priorität: 23.03.2011 DE 102011006002
(43) Veröffentlichungstag der Anmeldung: 29.01.2014
(73) Patentinhaber: Siemens Aktiengesellschaft, 80333 München (DE)
(72) Erfinder: SCHIFFERS, Toni, 41812 Erkelenz (DE); JENNEK, Steffen, 82061 Neuried (DE); WIESAND, Manfred, 90559 Burgthann (DE)
(86) Internationale Anmeldenummer: PCT/EP2012/054996
(87) Internationale Veröffentlichungsnummer: WO 2012/126946

(56) Entgegenhaltungen:
- WO-A2-00/24625
- DE-A1- 19 510 755
- DE-A1- 19 539 652

## Beschreibung

Die Erfindung betrifft einen Aktuator für ein Bremssystem eines Schienenfahrzeugs.

Die Erfindung betrifft weiterhin ein Bremssystem zum Bremsen eines Schienenfahrzeugs mit einem in seiner Gesamtheit zur Montage in einem Drehgestell des Schienenfahrzeugs eingerichteten derartigen Aktuator. Außerdem betrifft die Erfindung ein Schienenfahrzeug mit mehreren Wagen, die zu einem Fahrzeugverbund aneinander gekopplelt sind, das über ein derartiges Bremssystem verfügt.

Die Zulassung von Schienenfahrzeugen stellt hohe Anforderungen an die Bremsausrüstung der Fahrzeuge.

Im Rahmen der Zulassung von Schienenfahrzeugen erfolgt gemäß nationaler und internationaler Regularien und Gesetze die Prüfung des Bremssystems. Innerhalb dieser umfangreichen Prüfungen wird das Bremsvermögen der Bremse über ein vorgeschriebenes Verfahren, der sogenannten "Bremsbewertung" ermittelt. Dieses Bremsvermögen wird als sogenanntes "Bremsgewicht" dem Fahrzeug zugeordnet. Anhand des Bremsgewichts wird z.B. festgelegt wie schnell dieses Fahrzeug maximal fahren darf und wie schnell es auf bestimmten Strecken fahren darf. Für Schienenfahrzeuge, die im innerstädtischen Bereich verkehren, wie U-Bahnen oder Straßenbahnen, gelten andere Zulassungsverfahren für die Bremse, jedoch verfügen diese Fahrzeuge auch über Reibungsbremsen.

Das Bremsgewicht wird über dynamische Bremswegmessungen und Bremsversuche ermittelt.

Schienenfahrzeuge verfügen in der Regel über mehrere Bremssysteme die in den verschiedenen Bremsstellungen zum Einsatz kommen. Zu den Bremssystemen zählen insbesondere die Reibungsbremsen in der Ausführungsform Klotz- oder/und Scheibenbremse, die Elektrodynamische Bremse über einen Elektromotor, die Retarderbremse bei Dieselfahrzeugen, die Magnetschienenbremse und die Wirbelstrombremse.

Die Bremsbewertung erfolgt aus festgelegten Geschwindigkeiten bis hin zur vorgesehenen maximalen Geschwindigkeit des Schienenfahrzeuges in den Bremsstellungen R, P, G, R+Mg, R+E.

In allen Bremsstellungen wirkt die oben aufgeführte Reibungsbremse, wobei die Reibungsbremse in der Bremsstellung R+E in der Leistung zurückgehalten und die Leistung der verschleißfreien E-Bremse vorrangig genutzt wird.

Im Rahmen der Bremsbewertung und Festlegung des anrechenbaren Bremsgewichts gelten enge Toleranzen für die Streuung der gemessenen Bremswege aus jeweils gleichen Anfangsgeschwindigkeiten. Weiterhin sind bestimmte Rahmenbedingungen und Umgebungsbedingungen einzuhalten, damit die Versuche als gültig anerkannt werden.

Hinzu kommt über die TSI noch eine Abwertung des am Fahrzeug gemessenen Bremsvermögens durch das am Prüfstand ermittelte Bremsvermögen unter Nassbedingungen.

Weiterhin dürfen bei allen Bremsungen die maximal zulässigen Haftwerte zwischen Rad und Schiene nicht überschritten werden.

Dies führt beispielsweise unter der Verwendung heutiger Reibungsbremsen häufig dazu, dass eine Vielzahl an Bremswegversuchen sowie Anpassungen der Bremseinstellungen innerhalb der Bremsbewertung erforderlich sind bzw. die Bremsbewertung zu einem Ergebnis führt, welches für das Schienenfahrzeug einen nicht vertragskonformen Wert ergibt. Anschließend sind Anpassungen erforderlich und die Bremsbewertung ist zu wiederholen. Oftmals sind auch Kompromisse in der Bremseinstellung einzugehen, um einzelne aber entscheidende schlechte Bremswerte unter bestimmten Versuchsbedingungen auszugleichen. Die Ursache für diese Problematik liegt hauptsächlich in dem Reibwert zwischen den Reibpartnern der Reibungsbremse. Dieser Reibwert ist nicht konstant sondern abhängig von Geschwindigkeit, Druck, Temperatur, Leistung sowie Momentanzustand der Reibpartner. Um die bremstechnische Zulassung zu erreichen, werden daher auch hohe Anforderungen an die Qualität der Bremsbeläge und Bremssohlen gestellt, was zu hohen Entwicklungskosten und teuren Materialien führt.

Zusätzlich ist es heute nicht oder nur mit hohen Kosten möglich einen Belag- oder Klotz bzw. ein Belagmaterial oder Klotzmaterial auszutauschen und durch eine andere Belagsorte oder Klotzsorte des gleichen oder eines zweiten Herstellers zu ersetzen. Dies verschafft dem zugelassenen Hersteller eine gewisse Monopolstellung.

Das Problem wird bisher dadurch gelöst, dass bei zu hohen Abweichungen während der Prüfungen erst über Korrekturen an der Bremseinstellung das geforderte Bremsvermögen erreicht wird, was den Versuchsaufwand erhöht und Versuchswiederholungen erfordert. Oftmals wird auch das Bremsvermögen bei niedrigen Geschwindigkeiten über Druckerhöhung so angehoben, dass im höheren Geschwindigkeit- und Leistungsbereich die geforderten Werte erreicht werden können. Weiterhin stellen die Versuchsergebnisse in der Bremsbewertung heute nur eine Momentaufnahme dar. Betrieblich ist das Bremsvermögen abhängig von dem vorliegenden Reibwertniveau. Momentane Reibwertspitzen werden außerdem nicht korrigiert und führen heute zu erhöhter Radsatzbelastung und je nach Gleiszustand zu Gleitschutzauslösungen. Aufgrund der hohen Aufwendungen verzichtet man heute in der Regel auf die Zulassung eines zweiten Belagtyps oder auf den späteren Wechsel des einmal zugelassenen Belagtyps.

Verzögerungskraft geregelte Reibungsbremsen sind aus den Druckschriften WO 2008/031701 A1 bzw. DE102006044022 bekannt.

Weiterhin sind aus der deutschen Patentanmeldung mit dem Anmeldeaktenzeichen 10 2009 042 965.4 Bremssysteme mit intelligenten Aktoren bekannt.

Reibungsbremsen und Bremseinrichtungen zur sicheren Bremsung von Schienenfahrzeugen sind außerdem aus den Druckschriften EP1347910B1 und DE102004041672 bekannt.

Die Druckschrift DE102004041672 beschreibt eine Notbremseinrichtung und ein Verfahren zur Überwachung der Notbremsfunktion als Verbesserung zum Stand der Technik. Hier wird überwacht, ob die Bremssteuerung die richtigen Maßnahmen zur Notbremsung ergriffen hat. Ist dies nicht der Fall, leitet die Notbremseinrichtung die erforderlichen Maßnahmen ein. Die Berücksichtigung des Gleitschutzeingriffs ist ebenfalls beschrieben. Damit können laut dieser Patentschrift auch dezentrale, elektronisch angesteuerte Bremseinheiten mit Lastkorrektur, Gleitschutz und Ruckbegrenzung für Not-, Zwangs- und Schnellbremsungen verwendet werden.

Die Druckschrift EP1347910B1, sowie DE 195 10 755 A1, beschreibt eine elektromechanische Zuspanneinrichtung mit der auch im Sicherheits- oder Schnellbremsfall gleitschutzgeregelt und/oder lastkorrigiert gebremst werden kann.

Aufgabe der Erfindung ist es, einen Aktuator mit Verzögerungskraftregelung bereitzustellen, der bei seinem Einsatz in einem Reibungsbremssystem eines Schienenfahrzeug die Anrechenbarkeit des (somit Verzögerungskraft geregelten) Reibungsbremssystems sicher stellt.

Gelöst wird diese Aufgabe durch einen Aktuator für ein Bremssystem eines Schienenfahrzeugs
- mit einer Sollwerterfassungseinheit und einer Sollwertregelungseinrichtung,
- wobei die Sollwerterfassungseinheit an einem Ausgang einen Sollwert oder einen unter der Einwirkung eines Reduziersignals einer Gleitschutzregelungseinrichtung korrigierten Sollwert einer zu regelnden Verzögerungskraft oder eines zu regelnden Verzögerungsmomentes an einen Eingang der Sollwertregelungseinrichtung übermittelt, und
- wobei die Sollwertregelungseinrichtung den von der Sollwerterfassungseinheit übermittelten Sollwert auf einen ersten Ausgangs-Sollwert regelt,
- mit einer Rückfalleinheit, die einen vorgegebenen zweiten Ausgangs-Sollwert bereitstellt,
- mit einer Sollwert-Kraft-Umsetzungseinrichtung,
- mit einer Umschalteinrichtung, die in einer ersten Schaltstellung einen Ausgang der Sollwertregelungseinrichtung mit einem Eingang der Sollwert-Kraft-Umsetzungseinrichtung verbindet, so dass an dem Eingang der Sollwert-Kraft-Umsetzungseinrichtung der erste Ausgangs-Sollwert anliegt, und die in einer zweiten Schaltstellung einen Ausgang der Rückfalleinheit mit dem Eingang der Sollwert-Kraft-Umsetzungseinrichtung verbindet, so dass an dem Eingang der Sollwert-Kraft-Umsetzungseinrichtung der zweiten Ausgangs-Sollwert anliegt,
- wobei die Sollwert-Kraft-Umsetzungseinrichtung den an ihrem Eingang anliegenden der beiden Ausgangs-Sollwerte in einen Istwert einer Kraft zum Abbremsen des Schienenfahrzeugs umsetzt,
- mit Bremsmitteln, die den Istwert der Kraft in einen Istwert der zu regelnden Verzögerungskraft oder des zu regelnden Verzögerungsmomentes umsetzen,
- mit einem Sensor, der den Istwert der zu regelnden Verzögerungskraft oder des zu regelnden Verzögerungsmomentes ermittelt und an einem Eingang der Sollwertregelungseinrichtung bereitstellt,
- wobei die Sollwertregelungseinrichtung den ersten Ausgangs-Sollwert so einstellt, dass der erfasste Istwert dem von der Sollwerterfassungseinheit an die Sollwertregelungseinheit übermittelten Sollwert entspricht, und
- mit einer Überwachungseinheit, die bei einer Schnellbremsung von einer SB-Sollwertbestimmungseinrichtung einen Schnellbremssollwert oder zumindest einen Korrekturfaktor (fK-Last, fK-H/N, fK-GB) zur Bildung des Schnellbremssollwertes (SB-Soll) und von dem Sensor den Istwert empfängt und bei unzulässigen Abweichungen des Istwertes vom Schnellbremssollwert an die Umschalteinrichtung ein Umschaltsignal ausgibt, das ein Umschalten der Umschalteinrichtung von ihrer ersten Schaltstellung in ihre zweite Schaltstellung bewirkt.

Es wird als vorteilhaft angesehen, wenn auch die Sollwertregelungseinrichtung bei unzulässigen Abweichungen des Istwertes vom Schnellbremssollwert an die Umschalteinrichtung ein weiteres Umschaltsignal ausgibt, das ein Umschalten der Umschalteinrichtung von ihrer ersten Schaltstellung in ihre zweite Schaltstellung bewirkt.

In bevorzugter Ausgestaltung ist der von der Rückfalleinheit bereitgestellte vorgegebene zweite Ausgangs-Sollwert so vorgegeben ist, dass unter nominalen Reibwertbedingungen in der zweiten Schaltstellung der Umschalteinrichtung eine höhere äquivalente Verzögerungskraft erzielt wird als in der ersten Schaltstellung. Unter der äquivalenten Verzögerungskraft aₑ versteht der Fachmann dabei gemäß der DIN-Norm EN-Norm 14531-6 die über eine Wegstrecke gemittelte Verzögerung innerhalb eines bestimmten Geschwindigkeitsbereiches. Sie basiert auf einer Berechnung mit vollständig aufgebauter Bremskraft. Nominale Reibwertbedingungen bezeichnen hier den Auslegungsreibwert oder den Auslegungsreibwertverlauf entsprechend dem heute nach dem Stand der Technik üblichen Reibwert der verbreiteten Druckluftreibungsbremse mit Druckregelung im Vollbahnbereich.

Erfindungsgemäß wird insbesondere Folgendes vorgeschlagen:
Um die aufgrund der oben aufgeführten Problematik entstehenden Aufwendungen und Kosten deutlich zu reduzieren sowie eine erhöhte Bremswegsicherheit unter verschiedenen Betriebszuständen zu erzielen, wird vorgeschlagen, Schienenfahrzeuge mit einem anrechenbaren Verzögerungskraft geregelten Reibungsbremssystem auszurüsten.

Verzögerungskraft geregelt bedeutet in diesem Dokument, dass ein Sollwert für die einzelnen Reibungsbremsen oder Gruppen von Reibungsbremsen, wobei eine Reibungsbremse aus einer Reibpaarung, z.B. eine Bremsscheibe und auf ihr wirkende Bremsbeläge besteht, als Sollwert eines Bremsmomentes (Verzögerungsmomentes) oder als Sollwert einer Verzögerungskraft von einer übergeordneten Steuerung, in der Regel von der Bremssteuerung, angefordert und in der Sollwerterfassungseinheit in Abhängigkeit des von der SB-Sollwertbestimmungseinrichtung bereitgestellten Schnellbremssollwertes oder zusätzlich unter der Einwirkung des Reduziersignals der Gleitschutzregelungseinrichtung korrigiert wird, wobei der am Ausgang der Sollwerterfassungseinheit bereitgestellte korrigierte Sollwert von den Reibungsbremsen umgesetzt wird, wobei die Regelung auf den korrigierten Sollwert von jeder Reibungsbremse bzw. jeder Gruppe von Reibungsbremsen unabhängig von den anderen Reibungsbremsen durchgeführt wird.

Werden Gruppen von Reibungsbremsen auf eine Verzögerungskraft geregelt, dann sind nicht alle unten aufgeführten Vorteile vorhanden. Besteht die Gruppe aus den Reibungsbremsen einer Achse bzw. eines Radsatzes, so werden ähnliche Vorteile erzielt wie mit der Verzögerungskraftregelung jeder einzelnen Reibungsbremse.

Neben dem Einsatz der Verzögerungskraft geregelten Reibungsbremsen kann die Vereinfachung der Bremsbewertung auch über eine Verzögerungsregelung des Schienenfahrzeuges erreicht werden.

Hierdurch kann ebenfalls ein Belag- oder Klotzreibwert (Bremsklotz entspricht Bremssohle) unabhängiger Bremsweg erzielt werden. Jedoch ist damit das Bremsvermögen der einzelnen Bremsen wie heute nicht genau bestimmt.

Daher kann die Verzögerungsregelung des Schienenfahrzeuges genutzt werden, um das geforderte Bremsvermögen des gesamten Schienenfahrzeuges zu überwachen.

Bei der Verzögerungskraft geregelten Reibungsbremse wird die durch die einzelne Reibungsbremse erzielte Verzögerungskraft im Bremsradius und damit über die geometrischen Verhältnisse auch die Verzögerungskraft am Rad geregelt. Damit ist diese Reibungsbremse im Gegensatz zur heutigen Druck- oder Anpresskraft geregelten Bremse betrieblich unabhängig vom Reibwert zwischen den Reibpartnern. Unter 'betrieblich' werden die betrieblich zu erwartenden Reibwertschwankungen um den nominalen Reibwert verstanden.

Das erfindungsgemäße Schienenfahrzeug mit anrechenbarer Verzögerungskraft geregelter Reibungsbremse weist insbesondere folgende Merkmale auf:
In allen Bremsstellungen mit Beteiligung der Reibungsbremse (Scheibenbremse oder/und Klotzbremse) wird die Reibungsbremse auch bei den sicherheitsrelevanten Bremsungen, Sicherheitsbremsung, Notbremsung oder Schnellbremsung angerechnet, wobei die Bremsungen dadurch gekennzeichnet sind, dass sie zumindest bezogen auf die Reibungsbremsen Verzögerungskraft geregelt und bei Bedarf zusätzlich lastkorrigiert bzw. gleitschutzkorrigiert durchgeführt werden.

Selbstverständlich muss hierzu das Schienenfahrzeug mit diesem Bremssystem die bekannten Sicherheitsanforderungen an die Bremsausrüstung und an die anrechenbaren Bremssysteme erfüllen.

Im Interesse der Vollständigkeit muss noch verdeutlicht werden, dass die Verzögerungskraftregelung und hier insbesondere in der Anwendung in anrechenbaren Reibungsbremssystemen grundsätzlich Vorteile mit sich bringt, so dass auch die Verzögerungskraftregelung von hier nicht betrachteten Reibungsbremsen wie Trommelbremsen oder Magnetschienenbremsen sinnvoll sein kann. Erstere sind allerdings heute nicht weit verbreitet in Schienenfahrzeugen und letztere werden aufgrund der Unabhängigkeit vom Haftwert Rad/Schiene häufig eingesetzt.

Die Anrechenbarkeit der elektrodynamischen Bremse, der Wirbelstrombremse oder der Retarderbremse als verschleißfreie Verzögerungskraft geregelte Bremssysteme bringt zusätzlich den Vorteil mit, dass auf den Einsatz der verschleißbehafteten Reibungsbremsen weitestgehend verzichtet werden kann.

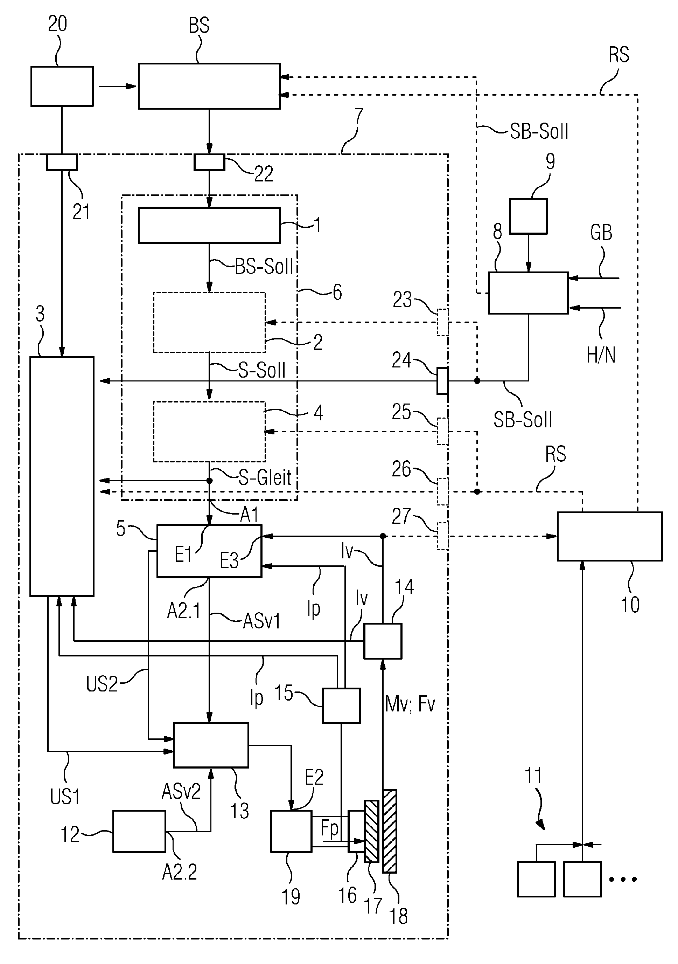

Eine beispielhafte Ausführungsform eines Schienenfahrzeuges mit anrechenbarer Verzögerungskraft geregelter Reibungsbremse wird im Folgenden anhand der Figur beschrieben.

Gemäß der Figur verfügt ein hier nicht gezeigtes Schienenfahrzeug über eine Fahrzeug- und/oder Bremssteuerung. Über die hier gezeigte Bremssteuerung BS erhält die Bremsbetätigungsanordnung, hier im weiteren Verlauf Aktor 7 genannt, einen Bremsbefehl, der über eine oder mehrere Steuerleitungen und/oder BUS und/oder über Funk an die Betätigungsanordnung übertragen wird.

Jede Achse des Schienenfahrzeuges ist üblicher Weise mit mindestens einem Aktor 7 ausgerüstet, so dass ein einzelner Wagen in der Regel über mindestens vier dieser Aktoren 7 verfügt. Beispielhaft ist hier nur ein Aktor 7 dargestellt.

Jeder Aktor 7 erhält im Not- Sicherheits- oder Schnellbremsfall, im Folgenden Schnellbremsfall genannt, zusätzlich ein Signal für die Schnellbremsung über eine Schnellbremsaktivierung 20, beispielsweise über eine sogenannte Schnellbremsschleife, die in der Regel Low Aktiv ausgeführt ist.

Dies bedeutet, dass der Aktor 7 im Schnellbremsfall das Signal für die Schnellbremsung über die Bremssteuerung BS und gleichzeitig über die Schnellbremsaktivierung 20 erhält.

Wie oben bereist erwähnt, sind auch Bremsungen im Schnellbremsfall dadurch gekennzeichnet, dass sie zumindest bezogen auf die Reibungsbremsen Verzögerungskraft geregelt und bei Bedarf zusätzlich lastkorrigiert bzw. gleitschutzkorrigiert durchgeführt werden, wobei für die einzelnen Reibungsbremsen oder Gruppen von Reibungsbremsen ein Sollwert BS-Soll eines Bremsmomentes (Verzögerungsmomentes) oder einer Verzögerungskraft von einer übergeordneten Steuerung - hier von der Bremssteuerung BS, angefordert wird.

Der Sollwert BS-Soll, den der Aktor 7 von der Bremssteuerung BS erhält, entspricht im Schnellbremsfall dem Schnellbremssollwert und im Betriebsbremsfall dem Betriebsbremssollwert. Der Sollwert BS-Soll ist ein Bremsmoment (Verzögerungsmoment) Mv oder eine Verzögerungskraft Fv und ist nicht gleichzusetzen mit der heute angeforderten Bremsbelag- oder Bremsklotzanpresskraft Fp. Bei heutigen pneumatischen Bremsen wird Fp durch den Zylinderdruck "C-Druck" oder über eine Feder erzeugt, welche erst über die Multiplikation mit dem Belag- oder Klotzreibwert die Verzögerungskraft bildet.

Der Sollwert BS-Soll, der von der Sollwerterfassungseinrichtung 1 im Aktor 7 erfasst wird, ist optional bereits lastkorrigiert, berücksichtigt optional bereits eine Hoch-/ Niedrigabbremsung H/N und optional das sogenannte GB Wirkt Signal GB. Weiterhin ist der Sollwert BS-Soll optional bereits Gleitschutz korrigiert.

Die Berücksichtigungen von H/N, GB und die Lastkorrektur können optional auch im Aktor 7 über eine erste Sollwertkorrektureinrichtung 2 erfolgen oder/und in der ersten Sollwertkorrektureinrichtung 2 kann eine Plausibilisierung vorgenommen werden.

Die Sollwertkorrektur in der ersten Sollwertkorrektureinrichtung 2 erhöht, begrenzt oder vermindert den Sollwert BS-Soll in Abhängigkeit von einem weiteren Eingangssignal, dem sogenannten SB-Sollwertsignal SB-Soll, gebildet von einer SB-Sollwertbestimmungseinrichtung 8. Alternativ können anstelle des SB-Sollwertsignals SB-Soll auch Korrekturfaktoren fK-Last und/oder fK-H/N und/oder fK-GB zur Sollwertkorrektur dienen, die von der SB-Sollwertbestimmungseinrichtung 8 gebildet werden.

Das SB-Sollwertsignal SB-Soll wird von der SB-Sollwertbestimmungseinrichtung 8 an den Aktor 7 über eine oder mehrere Steuerleitungen und /oder über einen Bus und /oder über Funk übertragen. Das SB-Sollwertsignal SB-Soll wird bezüglich der Lasterfassung in der SB-Sollwertbestimmungseinrichtung 8 aus mindestens einem Sensorsignal der Lastsensorikeinrichtung 9 gebildet, welches die Masse des abzubremsenden Fahrzeugs vollständig oder anteilig erfasst.

Die SB-Sollwertbestimmungseinrichtung 8 erzeugt das SB-Sollwertsignal SB-Soll wie oben beschrieben in Abhängigkeit von der erfassten Masse des Fahrzeugs und optional auch in Abhängigkeit von weiteren Eingangsgrößen, wie beispielsweise dem GB Wirkt Signal GB und/oder der Hoch-/Niedrigabbremsung H/N. Diese beiden Steuergrößen werden in bekannter Weise bei herkömmlichen pneumatischen Bremssystemen verwendet, um die Soll-Bremskraft in Abhängigkeit von der Geschwindigkeit des Fahrzeugs (Hoch-/Niedrigabbremsung H/N) und dem Bremsvermögen der elektrodynamischen Bremse (GB Wirkt Signal GB) zu verringern.

Alternativ hierzu ermittelt die SB-Sollwertbestimmungseinrichtung 8 den Korrekturfaktor fK-Last in Abhängigkeit von der erfassten Masse aus dem Sensorsignal der Lastsensorikeinrichtung 9, den Korrekturfaktor fK-H/N aus dem Signal H/N und den Korrekturfaktor fK-GB aus dem Signal GB. Die Korrekturfaktoren fK-Last, fK-H/N, fK-GB werden an den Aktor 7 über eine oder mehrere Steuerleitungen und /oder über einen Bus und /oder über Funk übertragen.

In einer zweiten Sollwertkorrektureinrichtung 4 kann optional das Reduziersignal RS von einer Gleitschutzregelungseinrichtung 10 (Antiblockierschutzeinrichtung) berücksichtigt werden, um so auch im Aktor 7 die Gleitschutzkorrektur vornehmen zu können oder/und um in der zweiten Sollwertkorrektureinrichtung 4 eine Plausibilisierung vornehmen zu können. Optional können die gemessenen Momente M auch von der Gleitschutzregelungseinrichtung 10 berücksichtigt werden, um den Gleitschutz zu optimieren.

Bei einer im Aktor 7 integrierten Sollwertkorrektur Gleitschutz mittels der zweiten Sollwertkorrektureinrichtung 4 wird ein Sollwert SSoll von der ersten Sollwertkorrektureinrichtung 2, der - wie oben bereits erwähnt - durch eine Sollwertkorrektur des Sollwertes BS-Soll gebildet ist, in Abhängigkeit des Reduziersignals RS beeinflusst. Das Reduziersignal wird von der Gleitschutzregelungseinrichtung 10 gebildet und über eine oder mehrere Steuerleitungen und /oder über einen Bus und /oder über ein Funk zum Aktor 7 übertragen. Die Gleitschutzregelungseinrichtung 10 erfasst über Raddrehzahlsensoren 11 die Drehzahl der Räder und begrenzt über das Reduziersignal RS den maximalen Radschlupf.

Erfindungsgemäß kann das Verzögerungsmoment (Bremsmoment) Mv oder die Verzögerungskraft Fv die Regelgröße sein, die über eine Sollwertregelungseinrichtung 5 geregelt wird. Die Regelgröße wird von einer Sollwert-Kraft-Umsetzungseinrichtung 19 (Sollwertumsetzer) über die Aktorkraft oder Belaganpresskraft Fp eingestellt.

Die die Kraft Fp erzeugende Sollwert-Kraft-Umsetzungseinrichtung (Sollwertumsetzer) 19 kann pneumatisch, mechanisch, elektrisch, hydraulisch oder als eine Kombination dieser Betätigungsmittel ausgeführt sein. Über den Reibwert zwischen Belag (Bremsbelag) 17 und Bremsscheibe 18 (oder Bremsklotz und Rad) wird bei drehender Bremsscheibe 18 das Verzögerungsmoment Mv oder die Verzögerungskraft Fv erzeugt.

Die Sollwertregelungseinrichtung 5 liest die Signale von einem Sensor 14 und optional von einem Sensor 15 ein.

Über die bekannten geometrischen Verhältnisse erfolgt über die Regelung der Verzögerungskraft Fv bzw. des Verzögerungsmomentes Mv an der Bremse auch direkt die Regelung der Verzögerungskraft am Rad. Somit sind die Verzögerung und der Bremsweg im einstellbaren Bereich unabhängig vom Belagreibwert.

In besonders vorteilhafter Weise wird zum Ausgleich von Reibwertschwankungen die maximal erzeugbare Belaganpresskraft Fp mehr als 10% höher gelegt als die unter nominalen Reibwertbedingungen für eine äquivalente Verzögerung erforderliche maximale Belaganpresskraft bei Schnellbremsungen.

Aufgrund der geforderten Sicherheit im Schnellbremsfall findet über eine Überwachungseinrichtung 3 im Aktor 7 eine Überwachung der Schnellbremsung statt.

In der Überwachungseinrichtung 3 wird geprüft, ob die Schnellbremsung umgesetzt wird und der zuletzt hinterlegte Schnellbremssollwert SB-Soll dem Istwert Iv der zu regelnden Verzögerungskraft Fv oder des zu regelnden Verzögerungsmomentes Mv entspricht. Hierzu erhält die Überwachungseinrichtung 3 neben dem Schnellbremssollwert SB-Soll oder alternativ neben zumindest einem der Korrekturfaktoren fK-Last, fK-H/N und fK-GB zur Bildung des Schnellbremssollwertes SB-Soll, die Messwerte Iv (Istwerte des Bremsmomentes Mvoder der Verzögerungskraft Fv) und optional Ip (Istwerte der Belaganpresskraft Fp) und optional den Gleitschutz-korrigierten Sollwert SGLEIT von der zweiten Sollwertkorrektureinrichtung 4.

Bei einer ersten Ausgestaltung erhält also die Überwachungseinrichtung 3 von der SB-Sollwertbestimmungs-einrichtung 8 bereits den in der SB-Sollwertbestimmungs-einrichtung 8 berechneten Schnellbremssollwert SB-Soll.

Bei der oben genannten alternativen Ausgestaltung, bei der die Überwachungseinrichtung 3 von der SB-Sollwertbestimmungseinrichtung 8 die Korrekturfaktoren fK-Last, fK-H/N, fK-GB erhält, wird der Schnellbremssollwert SB-Soll von der Überwachungseinrichtung 3 selbst gebildet, und zwar anhand des Korrekturfaktors fK-Last und/oder des Korrekturfaktors fK-H/N und/oder des Korrekturfaktors fK-GB und anhand einer Schnellbremskennlinie SB-Grenz. Hierzu fordert die Überwachungseinrichtung 3 von der Bremssteuerung BS die dort hinterlegte Schnellbremskennlinie SB-Grenz an.

Die Überwachungseinrichtung 3 vergleicht den Messwert Iv, den Schnellbremssollwert SB-Soll und den Gleitschutz-korrigierten Sollwert SGLEIT.

Mit anderen Worten wird erfindungsgemäß ein Aktuator für ein Bremssystem eines Schienenfahrzeugs bereitgestellt. Dieser Aktuator ist versehen:
- mit der Sollwerterfassungseinheit 6 und der Sollwertregelungseinrichtung 5,
- wobei die Sollwerterfassungseinheit 6 an einem Ausgang A1 den Sollwert SSoll oder optional den unter der Einwirkung des Reduziersignals RS der Gleitschutzregelungseinrichtung 10 korrigierten Sollwert SGleit der zu regelnden Verzögerungskraft Fv oder des zu regelnden Verzögerungsmomentes Mv bereitstellt und an einen Eingang E1 der Sollwertregelungseinrichtung 5 übermittelt, und
- wobei die Sollwertregelungseinrichtung 5 den von der Sollwerterfassungseinheit 6 übermittelten Sollwert SSoll, optional SGleit, auf einen ersten Ausgangs-Sollwert ASv1 regelt,
- mit einer Rückfalleinheit 12, die einen vorgegebenen zweiten Ausgangs-Sollwert ASv2 bereitstellt,
- mit der Sollwert-Kraft-Umsetzungseinrichtung 19,
- mit einer Umschalteinrichtung 13 die in einer ersten Schaltstellung einen Ausgang A2.1 der Sollwertregelungseinrichtung 5 mit einem Eingang E2 der Sollwert-Kraft-Umsetzungseinrichtung 19 verbindet, so dass an dem Eingang E2 der Sollwert-Kraft-Umsetzungseinrichtung 19 der erste Ausgangs-Sollwert ASv1 anliegt, und die in einer zweiten Schaltstellung einen Ausgang A2.2 der Rückfalleinheit 12 mit dem Eingang E2 der Sollwert-Kraft-Umsetzungseinrichtung 19 verbindet, so dass an dem Eingang E2 der Sollwert-Kraft-Umsetzungseinrichtung 19 der zweiten Ausgangs-Sollwert ASv2 anliegt,
- wobei die Sollwert-Kraft-Umsetzungseinrichtung 19 den an ihrem Eingang E2 anliegenden der beiden Ausgangs-Sollwerte in einen Istwert Ip der Kraft Fp zum Abbremsen des Schienenfahrzeugs umsetzt,
- mit Bremsmitteln in Form einer als Ganzes mit 16 bezeichneten Hebelmechanik mit Anpresshalter, einem hier als Bremsbelag 17 ausgebildeten Anpressteil und der Bremsscheibe 18, die den Istwert Ip der Kraft Fp in einen Istwert Iv der zu regelnden Verzögerungskraft Fv oder des zu regelnden Verzögerungsmomentes Mv umsetzen,
- mit dem Sensor 14, der den Istwert Iv der zu regelnden Verzögerungskraft Fv oder des zu regelnden Verzögerungsmomentes Mv ermittelt und an einem Eingang E3 der Sollwertregelungseinrichtung 5 bereitstellt,
- wobei die Sollwertregelungseinrichtung 5 den ersten Ausgangs-Sollwert ASv1 so einstellt, dass der erfasste Istwert Iv dem von der Sollwerterfassungseinheit 6 an die Sollwertregelungseinrichtung übermittelten Sollwert (SSoll, optional SGleit) entspricht, und
- mit der Überwachungseinheit, die bei einer Schnellbremsung von der SB-Sollwertbestimmungseinrichtung den Schnellbremssollwert SB-Soll oder zumindest einen Korrekturfaktor (fK-Last, fK-H/N, fK-GB) zur Bildung des Schnellbremssollwertes (SB-Soll) und von dem Sensor 14 den Istwert Iv empfängt und bei unzulässigen Abweichungen des Istwertes Iv vom Schnellbrems-Sollwert SB-Soll an die Umschalteinrichtung 13 ein Umschaltsignal US1 ausgibt, das ein Umschalten der Umschalteinrichtung 13 von ihrer ersten Schaltstellung in ihre zweite Schaltstellung bewirkt.

Weiterhin gibt auch die Sollwertregelungseinrichtung 5 bei vorgegebenen unzulässigen Abweichungen des Istwertes Iv vom Schnellbremssollwert SB-Soll an die Umschalteinrichtung 13 ein weiteres Umschaltsignal US2 aus, das ein Umschalten der Umschalteinrichtung 13 von ihrer ersten Schaltstellung in ihre zweite Schaltstellung bewirkt.

Eine derartige unzulässige Abweichung liegt vor, wenn der Messwert Iv von dem Sollwert SB-Soll für eine Zeit dt um einen Wert dMv; dFv abweicht.

Optional kann auch vorgesehen sein, dass eine unzulässige Abweichung vorliegt, die zu einem Umschalten führt, wenn der Messwert Iv von dem Sollwert SGleit für eine Zeit dt um einen Wert dMv; dFv abweicht.

Das Umschaltsignal US1 und auch das Umschaltsignal US2 führen in der Umschaltvorrichtung 13 dazu, dass eine passive Schnellbremskraft über eine Kraftsollwerterzeugungseinrichtung der Rückfalleinheit (Rückfallebene) eingestellt wird.

Mit der oben beispielhaft beschriebenen Architektur können die Sicherheitsanforderungen an die Schnellbremsung erfüllt werden, wodurch die Voraussetzungen für die Zulassung des erfindungsgemäßen Schienenfahrzeugs mit anrechenbarer Verzögerungskraft geregelter Reibungsbremse gegeben sind.

Bezogen auf die Anforderungen an die passive Rückfallebene wird erfindungsgemäß vorgeschlagen, die erforderliche passive Schnellbremskraft über Prüfstandversuche festzulegen und über statische Prüfungen am Fahrzeug zu überprüfen. Erfindungsgemäß ist die passive Schnellbremskraft so einzustellen, dass mit ihr eine höhere äquivalente (mittlere) Verzögerungskraft bzw. ein höherer äquivalenter (mittlerer) Verzögerungsmoment erzielt wird als mit der geregelten Bremse. Gegebenenfalls müssen abhängig von den Anforderungen der jeweiligen Zulassungsbehörde und/oder des Betreibers an die passive Rückfallebene optional noch Nachweise zur passiven Rückfallebene über Bremsversuche erbracht werden.

Die Figur zeigt Schnittstellen 21 bis 27 des Aktors 7. Es muss aber ergänzend erwähnt werden, dass in der Figur zur besseren Übersicht nicht alle Schnittstellen zwischen Fahrzeugsteuerung bzw. Bremssteuerung BS und Aktor 7 dargestellt sind. Hier sind insbesondere zu nennen: Spannungsversorgung, Bremse gelöst Schleife oder die drähtige Verbindung zum elektrischen Notlösen.

Ein Schienenfahrzeug mit einem anrechenbaren Verzögerungskraft geregelten Reibungsbremssystem bietet unter anderem folgende Vorteile:
Die Bremsbewertung und damit auch die Zulassung kann deutlich einfacher und mit höherer Sicherheit für den Fahrbetrieb erfolgen, da die Bremswege unabhängig vom Belag- oder Klotzreibwert nahezu konstant sind, d.h. auch bei ungünstigen hohen oder niedrigen Belag- oder Klotzreibwerten, z.B. hervorgerufen durch Nässe oder Temperatur, werden die geforderten Bremswege eingehalten.

Erhöhte Bremswegsicherheit im täglichen Einsatz des Schienenfahrzeuges unter verschiedenen Betriebsbedingungen.

Erkennungsmöglichkeit einer ungewollt festsitzenden oder angelegten Bremse.

Weniger Gleitschutzeingriffe und geringere Flachstellengefahr durch die Verzögerungskraftregelung. Im Bremsverlauf ansteigende Belag- oder Klotzreibwerte führen nicht zu einer erhöhten Bremskraft am Rad und damit auch nicht zu einem erhöhten Haftwertbedarf.

Effektiver Gleitschutz durch hohe Dynamik und durch die direkte Messung der Verzögerungskraft bzw. des Verzögerungsmomentes.

Gleichmäßige Verteilung der Bremsenergie auf alle Bremsen eines Ansteuerkreises und damit auch eine höhere Standzeit von Bremsscheibe und Bremsbelag.

Definierte vorhersehbare Belastung am Radsatz und damit eine höhere Sicherheit in der Auslegung der Radsätze Einfacher Belagtypwechsel möglich ohne eine Anpassung der Software oder Hardware im Bremssystem.

Vereinfachte Zulassung des Schienenfahrzeuges bei Änderungen des Belag- oder Klotztyps.

Die Anforderungen an die Reibwertcharakteristik sind deutlich niedriger, so dass der Bremsbelagentwicklungsaufwand und die Bremsbelagkosten verringert werden könnten. Die Belagentwicklung kann hinsichtlich Belaglebensdauer und Scheibenlebensdauer optimiert werden und führt damit zur Reduktion der LCC Kosten. Dies gilt natürlich übertragen auch für die Bremssohlen oder Klötze.

### Bezugszeichenliste

- 1: Sollwerterfassungseinrichtung
- 2: Sollwertkorrektureinrichtung
- 3: Überwachungseinrichtung
- 4: Sollwertkorrektureinrichtung Gleitschutz
- 5: Sollwertregelungseinrichtung
- 6: Sollwerterfassungseinheit
- 7: Aktor (Aktuator, Bremsbetätigungsanordnung)
- 8: SB-Sollwertbestimmungseinrichtung
- 9: Lastsensorikeinrichtung
- 10: Gleitschutzregelungseinrichtung
- 11: Raddrehzahlsensoren
- 12: Rückfalleinheit (Rückfallebene) mit Kraftsollwerterzeugungseinrichtung
- 13: Umschaltvorrichtung zum Umschalten auf Rückfallebene
- 14: Sensor (Verzögerungsmoment-Erfassungseinheit, Momentensensorik)
- 15: Sensor (Krafterfassungseinheit (Kraftsensorik)
- 16: Hebelmechanik mit Anpressteilhalter
- 17: Anpressteil (Bremsbelag)
- 18: Bremsscheibe
- 19: Sollwert-Kraft-Umsetzungseinrichtung (Sollwertumsetzer)
- 20: Schnellbremsaktivierung (beispielsweise Schnellbremsschleife)
- 21 bis 27: Schnittstellen des Aktors
- A1: Ausgang der Sollwerterfassungseinheit
- E1, E3: Eingänge der Sollwertregelungseinrichtung
- A2.1: Ausgang der Sollwertregelungseinrichtung
- A2.2: Ausgang der Rückfalleinheit
- E2: Eingang der Sollwert-Kraft-Umsetzungseinrichtung

## Patentansprüche

1. Aktuator (7) für ein Bremssystem eines Schienenfahrzeugs
- mit einer Sollwerterfassungseinheit (6) und einer Sollwertregelungseinrichtung (5),
- wobei die Sollwerterfassungseinheit (6) an einem Ausgang (A1) einen Sollwert (SSoll) oder einen unter der Einwirkung eines Reduziersignals (RS) einer Gleitschutzregelungseinrichtung (10) korrigierten Sollwert(SGleit) einer zu regelnden Verzögerungskraft (Fv) oder eines zu regelnden Verzögerungsmomentes (Mv) bereitstellt und an einen Eingang (E1) der Sollwertregelungseinrichtung (5) übermittelt, und
- wobei die Sollwertregelungseinrichtung (5) den von der Sollwerterfassungseinheit (6) übermittelten Sollwert (SSoll; SGleit) auf einen ersten Ausgangs-Sollwert (ASv1) regelt,
- mit einer Rückfalleinheit (12), die einen vorgegebenen zweiten Ausgangs-Sollwert (ASv2) bereitstellt,
- mit einer Sollwert-Kraft-Umsetzungseinrichtung (19),
- mit einer Umschalteinrichtung (13), die in einer ersten Schaltstellung einen Ausgang (A2.1) der Sollwertregelungseinrichtung (5) mit einem Eingang (E2) der Sollwert-Kraft-Umsetzungseinrichtung (19) verbindet, so dass an dem Eingang (E2) der Sollwert-Kraft-Umsetzungseinrichtung (19) der erste Ausgangs-Sollwert (ASv1) anliegt, und die in einer zweiten Schaltstellung einen Ausgang (A2.2) der Rückfalleinheit (12) mit dem Eingang (E2) der Sollwert-Kraft-Umsetzungseinrichtung (19) verbindet, so dass an dem Eingang (E2) der Sollwert-Kraft-Umsetzungseinrichtung (19) der zweiten Ausgangs-Sollwert (ASv2) anliegt,
- wobei die Sollwert-Kraft-Umsetzungseinrichtung (19) den an ihrem Eingang (E2) anliegenden der beiden Ausgangs-Sollwerte in einen Istwert (Ip) einer Kraft (Fp) zum Abbremsen des Schienenfahrzeugs umsetzt,
- mit Bremsmitteln (16, 17, 18), die den Istwert (Ip) der Kraft (Fp) in einen Istwert (Iv) der zu regelnden Verzögerungskraft (Fv) oder des zu regelnden Verzögerungsmomentes (Mv) umsetzen,
- mit einem Sensor (14), der den Istwert (Iv) der zu regelnden Verzögerungskraft (Fv) oder des zu regelnden Verzögerungsmomentes (Mv) ermittelt und an einem Eingang (E3) der Sollwertregelungseinrichtung (5) bereitstellt,
- wobei die Sollwertregelungseinrichtung (5) den ersten Ausgangs-Sollwert (ASv1) so einstellt, dass der erfasste Istwert (Iv) dem von der Sollwerterfassungseinheit (6) an die Sollwertregelungseinheit (5) übermittelten Sollwert (SSoll; SGleit) entspricht, und
- mit einer Überwachungseinheit (3), die bei einer Schnellbremsung von einer SB-Sollwertbestimmungseinrichtung (8) einen Schnellbremssollwert (SB-Soll) oder zumindest einen Korrekturfaktor (fK-Last, fK-H/N, fK-GB) zur Bildung des Schnellbremssollwertes (SB-Soll) und von dem Sensor (14) den Istwert (Iv) empfängt und bei unzulässigen Abweichungen des Istwertes (Iv) vom Schnellbremssollwert (SB-Soll) an die Umschalteinrichtung (13) ein Umschaltsignal (US1) ausgibt, das ein Umschalten der Umschalteinrichtung (13) von ihrer ersten Schaltstellung in ihre zweite Schaltstellung bewirkt.

2. Aktuator (7) nach Anspruch 1,
**dadurch gekennzeichnet, dass** auch die Sollwertregelungseinrichtung (5) bei unzulässigen Abweichungen des Istwertes (Iv) vom Schnellbremssollwert (SB-Soll) an die Umschalteinrichtung (13) ein weiteres Umschaltsignal (US2) ausgibt, das ein Umschalten der Umschalteinrichtung (13) von ihrer ersten Schaltstellung in ihre zweite Schaltstellung bewirkt.

3. Aktuator (7) nach einem der Ansprüche 1 oder 2,
**dadurch gekennzeichnet, dass** der von der Rückfalleinheit (12) bereitgestellte vorgegebene zweite Ausgangs-Sollwert (ASv2) so vorgegeben ist, dass unter nominalen Reibwertbedingungen in der zweiten Schaltstellung der Umschalteinrichtung (13) eine höhere äquivalente Verzögerungskraft erzielt wird als in der ersten Schaltstellung.

4. Bremssystem zum Bremsen eines Schienenfahrzeugs mit einem in seiner Gesamtheit zur Montage im einem Drehgestell des Schienenfahrzeugs eingerichteten Aktuator (7), **dadurch gekennzeichnet, dass** der Aktuator (7) nach einem der Ansprüche 1 bis 3 ausgebildet ist.

5. Schienenfahrzeug mit mehreren Wagen, die zu einem Fahrzeugverbund aneinander gekoppelt sind, wobei jeder Wagen über wenigstens ein Drehgestell verfügt
**gekennzeichnet, durch**
ein Bremssystem gemäß Anspruch 4.

## Claims

1. Actuator (7) for a brake system of a rail vehicle
- comprising a set value detection unit (6) and a set value control device (5),
- wherein the set value detection unit (6) provides, at an output (A1), a set value (Sset) or a set value (Sskid) adjusted under the influence of a reducing signal (RS) of an anti-skid protection control device (10) for a decelerating force (Fv) to be controlled or a decelerating torque (Mv) to be controlled and transmits said set value to an input (El) of the set value control device (5), and
- wherein the set value control device (5) controls the set value (Sset; Sskid), transmitted by the set value detection unit (6), to a first output set value (ASvl),
- comprising a fall-back unit (12), which provides a predefined second output set value (ASv2),
- comprising a set value/force conversion device (19),
- comprising a switch-over device (13), which connects an output (A2.1) of the set value control device (5) to an input (E2) of the set value/force conversion device (19) in a first switching position, so that the first output set value (Asv1) is present at the input (E2) of the set value/force conversion device (19), and which connects an output (A2.2) of the fall-back unit (12) to the input (E2) of the set value/force conversion device (19) in a second switching position, so that the second output set value (ASv2) is present at the input (E2) of the set value/force conversion device (19),
- wherein the set value/force conversion device (19) converts the output set value of the two output set values present at the input (E2) into an actual value (Ip) of a force (Fp) for braking the rail vehicle,
- comprising braking means (16, 17, 18), which convert the actual value (Ip) of the force (Fp) into an actual value (Iv) of the decelerating force (FV) to be controlled or of the decelerating torque (Mv) to be controlled,
- comprising a sensor (14), which determines the actual value (Iv) of the decelerating force (Fv) to be controlled or of the decelerating torque (Mv) to be controlled and provides said actual value at an input (E3) of the set value control device (5),
- wherein the set value control device (5) sets the first output set value (ASvl) in such a way that the detected actual value (Iv) corresponds to the set value (Sset; Sskid) transmitted to the set value control unit (5) by the set value detection unit (6), and
- comprising a monitoring unit (3), which receives a fast braking set value (FB-set) or at least one correction factor (fK-load, fK-H/L, fK-GB) for calculating the fast braking set value (FB-set) from a fast braking set value determination device (8) in the event of a fast braking operation, receives the actual value (Iv) from the sensor (14) and outputs a switch-over signal (US1) to the switch-over device (13) in the event of impermissible deviations of the actual value (Iv) from the fast braking set value (FB-set), which switch-over signal causes the switch-over device (13) to switch over from the first switching position thereof to the second switching position thereof.

2. Actuator (7) according to claim 1,
**characterised in that**
in the event of impermissible deviations of the actual value (Iv) from the fast braking set value (FB-set), the set value control device (5) also outputs an additional switch-over signal (US2) to the switch-over device (13), which switch-over signal causes the switch-over device (13) to switch over from the first switching position thereof to the second switching position thereof.

3. Actuator (7) according to one of claims 1 or 2,
**characterised in that**
the predefined second output set value (ASv2) provided by the fall-back unit (12) is predefined such that under nominal friction coefficient conditions a higher equivalent decelerating force is achieved in the second switching position of the switch-over device (13) than in the first switching position.

4. Brake system for braking a rail vehicle with an actuator (7) set up in its entirety for assembly in a bogie of the rail vehicle,
**characterised in that**
the actuator (7) is configured according to one of claims 1 to 3.

5. Rail vehicle with several wagons, which are linked to each other to form a group of vehicles, wherein each wagon has at least one bogie,
**characterised by**
a brake system according to claim 4.

## Revendications

1. Actionneur ( 7 ) pour un système de freinage d'un véhicule ferroviaire,
- comprenant une unité ( 6 ) de détection d'une valeur de consigne et un dispositif ( 5 ) de régulation d'une valeur de consigne,
- dans lequel l'unité ( 6 ) de détection d'une valeur de consigne met, à une sortie ( A1 ), à disposition une valeur ( SSoll ) de consigne ou une valeur ( SGleit ) de consigne, corrigée par l'effet d'un signal ( RS ) réducteur d'un dispositif ( 10 ) de régulation d'anti-enrayage, d'une force ( Fv ) de retard à réguler ou d'un couple ( Mv ) de retard à réguler et la transmet à une entrée ( E1 ) du dispositif ( 5 ) de régulation d'une valeur de consigne, et
- dans lequel le dispositif ( 5 ) de régulation d'une valeur de consigne régule, à une première valeur ( ASv1 ) de consigne de sortie, la valeur ( SSoll; SGleit ) de consigne transmise par l'unité ( 6 ) de détection d'une valeur de consigne,
- comprenant une unité ( 12 ) d'aubinage, qui met à disposition une deuxième valeur ( ASv2 ) de consigne de sortie donnée à l'avance,
- comprenant un dispositif ( 19 ) de transformation valeur de consigne-force,
- comprenant un dispositif ( 13 ) de commutation, qui, dans une première position de commutation, relie une sortie ( A2.1 ) du dispositif ( 5 ) de régulation d'une valeur de consigne à l'entrée ( E2 ) du dispositif ( 19 ) de transformation valeur de consigne-force, de manière à appliquer la première valeur ( ASv1 ) de consigne de sortie à l'entrée ( E2 ) du dispositif ( 19 ) de transformation valeur de consigne-force, et qui, dans une deuxième position de commutation, relie une sortie ( A2.2 ) de l'unité ( 12 ) d'aubinage à l'entrée ( E2 ) du dispositif ( 19 ) de transformation valeur de consigne-force, de manière à appliquer la deuxième valeur ( ASv2 ) de consigne de sortie à l'entrée ( E2 ) du dispositif ( 19 ) de transformation valeur de consigne-force,
- dans lequel le dispositif ( 19 ) de transformation valeur de consigne-force transforme celle des deux valeurs de consigne de sortie qui s'appliquent à son entrée ( E2 ) en une valeur ( Ip ) réelle d'une force ( Fp ) pour freiner le véhicule ferroviaire,
- comprenant des moyens ( 16, 17, 18 ) de freinage, qui transforment la valeur ( Ip ) réelle de la force ( Fp ) en une valeur ( Iv ) réelle de la force ( Fv ) de retard à réguler ou du couple ( Mv ) de retard à réguler,
- comprenant un capteur ( 14 ), qui détermine la valeur ( Iv ) réelle de la force ( Fv ) de retard à réguler ou du couple ( Mv ) de retard à réguler et la met à disposition à une entrée ( E3 ) du dispositif ( 5 ) de régulation d'une valeur de consigne,
- dans lequel le dispositif ( 5 ) de régulation d'une valeur de consigne règle la première valeur ( ASv1 ) de consigne de sortie, de manière à ce que la valeur ( Iv ) réelle détectée corresponde à la valeur ( SSoll; SGleit ) de consigne transmise par l'unité ( 6 ) de détection d'une valeur de consigne à l'unité ( 5 ) de régulation d'une valeur de consigne, et
- comprenant une unité ( 3 ) de contrôle, qui, lors d'un freinage rapide, reçoit, d'un dispositif ( 8 ) de détermination d'une valeur de consigne ( Sv ), une valeur
( SB-Soll ) de consigne de freinage rapide ou au moins un facteur ( fK-Last, fK-H/N, fK-GB ) de correction pour former la valeur ( SB-Soll ) de consigne de freinage rapide et, du capteur ( 14 ), la valeur ( Iv ) réelle et, en cas d'écart inadmissible de la valeur ( Iv ) réelle à la valeur ( SB-Soll ) de consigne de freinage rapide, envoie, au dispositif ( 13 ) de commutation, un signal ( US1 ) de commutation, qui provoque une commutation du dispositif ( 13 ) de commutation de sa première position de commutation à sa deuxième position de commutation.

2. Actionneur ( 7 ) suivant la revendication 1,
**caractérisé en ce que**
le dispositif ( 5 ) de régulation d'une valeur de consigne envoie aussi, en cas d'écart inadmissible de la valeur ( Iv ) réelle à la valeur ( SB-Soll ) de consigne de freinage rapide, au dispositif ( 13 ) de commutation, un autre signal ( US2 ) de commutation, qui provoque une commutation du dispositif ( 13 ) de commutation de sa première position de commutation à sa deuxième position de commutation.

3. Actionneur ( 7 ) suivant l'une des revendications 1 ou 2,
**caractérisé en ce que**
la deuxième valeur ( ASv2 ) de consigne de sortie donnée à l'avance est mise à disposition par l'unité ( 12 ) d'aubinage et donnée à l'avance, de manière à ce que, dans des conditions de valeurs de frottement nominales, dans la deuxième position de commutation du dispositif ( 13 ) de commutation, il soit obtenu une force de retard équivalente plus grande que dans la première position de commutation.

4. Système de freinage pour freiner un véhicule ferroviaire ayant un actionneur ( 7 ) conçu dans son ensemble pour être monté dans un boggie du véhicule ferroviaire,
**caractérisé en ce que**
l'actionneur ( 7 ) est constitué suivant l'une des revendications 1 à 3.

5. Véhicule ferroviaire ayant plusieurs voitures, qui sont attelées entre elles en un convoi, dans lequel chaque voiture dispose d'au moins un boggie,
**caractérisé par**
un système de freinage suivant la revendication 4.
